# FASCICULE DE BREVET EUROPEEN

(11) **EP 3 781 623 B1**
(45) Date de publication et mention de la délivrance du brevet: **24.11.2021**
(21) Numéro de dépôt: 19762190.7
(22) Date de dépôt: 25.07.2019
(51) Int. Cl.: C08K 5/14

(54) **COMPOSITION COMPRENANT UN MÉLANGE DE PEROXYDES ORGANIQUES DONT LE 1,3-1,4-BIS (TERT-BUTYLPEROXY ISOPROPYL)BENZÈNE POUR LA RÉTICULATION DE POLYMÈRES RÉTICULABLES**
ZUSAMMENSETZUNG MIT EINER MISCHUNG AUS ORGANISCHEN PEROXIDEN EINSCHLIESSLICH 1,3-1,4-BIS-(TERT-BUTYLPEROXY-ISOPROPYL)BENZOL ZUR VERNETZUNG VON VERNETZBAREN POLYMEREN
COMPOSITION COMPRISING A MIXTURE OF ORGANIC PEROXIDES INCLUDING 1,3-1,4-BIS(TERT-BUTYLPEROXY-ISOPROPYL)BENZENE FOR CROSS-LINKING CROSS-LINKABLE POLYMERS

(30) Priorité: 25.07.2018 FR 1856935
(43) Date de publication de la demande: 24.02.2021
(73) Titulaire: ARKEMA FRANCE, 92700 Colombes (FR)
(72) Inventeur: LU, Chao, CHANGSHU, Jiangsu 215522 (CN)
(74) Mandataire: Arkema Patent
(86) Numéro de dépôt international: PCT/FR2019/051844
(87) Numéro de publication internationale: WO 2020/021205

(56) Documents cités:
- WO-A1-2016/094200
- US-A1- 2008 051 496

## Description

La présente invention concerne une composition comprenant un mélange de peroxydes organiques, tels que définis ci-après, qui est destinée à être notamment utilisée pour la réticulation, en particulier l'amélioration de la vitesse de réticulation, de polymères réticulables, tels que des polymères thermoplastiques et/ou élastomères.

L'invention se rapporte également à l'utilisation d'une composition comprenant un mélange de peroxydes organiques, tels que définis ci-après, et au moins un polymère réticulable pour la fabrication de tout ou partie d'un article, de préférence un article appartenant à l'industrie de la chaussure.

L'invention a aussi trait à un article, de préférence un article appartenant à l'industrie de la chaussure ou des tapis de sol, dont tout ou partie est susceptible d'être obtenu par réticulation de la composition telle que définie précédemment.

La réticulation de polymères réticulables, notamment de polymères thermoplastiques et/ou de polymères élastomères, confère généralement à une très large variété de produits, par exemple des joints, des tuyaux, des articles appartenant à l'industrie du tapis, en particulier pour le capitonnage/remplissage des tapis, des articles appartenant à l'industrie de la chaussure, en particulier des semelles, des câbles ou des isolants, des propriétés thermomécaniques avantageuses, telles qu'une meilleure élasticité et/ou une résistance au fluage améliorée. US 2008/051496 A1 divulgue des compositions de peroxyde organique comprenant un nitroxide comme 8-OHT comprenant au moins un peroxyde choisi parmi 1,3-1,4-bis(tert-butylperoxy-isopropyl) benzène, 1,1'-di(tert-butylperoxy)-3,3,5-trimethylcyclohexane et n-butyl-4,4'-di(tert-butylperoxy)valérate. La composition est utilisée pour la réticulation de polymères réticulables comme l'EVA.

WO 2016/094200 A1 divulgue des compositions de peroxyde organique comprenant Luperox F, Luperox IP-D16 et 4-OHT. La composition est utilisée pour la réticulation de HDPE.

Ainsi les procédés de préparation de ces produits mettent principalement en œuvre des polymères thermoplastiques et/ou des élastomères, tels que des copolymères d'éthylène et d'acétate de vinyle (EVA), différents grades de polyéthylène, du polypropylène, du caoutchouc naturel ou siliconé, qui sont réticulés (ou durcis) sous l'action d'agents de réticulation.

Les agents de réticulation typiquement employés sont des peroxydes organiques, notamment le peroxyde de dicumyle (DCP). A titre d'exemple, le peroxyde de dicumyle, vendu sous la dénomination commerciale Luperox® DCP, est classiquement utilisé dans la confection d'articles appartenant à l'industrie du tapis de sol et également à l'industrie de la chaussure, notamment de semelles, fabriquées à partir de compositions susceptibles de se trouver sous forme de mousse contenant des copolymères d'éthylène et d'acétate de vinyle (EVA) réticulés ou du polyéthylène réticulé en tant que composant principal.

Les compositions comprenant les polymères ainsi réticulés sont généralement préparées par le biais de procédés de moulage, tels qu'un procédé de moulage par injection ou un procédé de moulage par compression. Les produits ou articles précédemment décrits sont donc élaborés dans des moules adaptés au sein desquels la réticulation des polymères thermoplastiques et/ou des élastomères a lieu.

Cependant, la décomposition thermique du peroxyde de dicumyle au cours de la réticulation génère le plus souvent la formation d'acétophénone, en tant que sous-produit, ce qui engendre une odeur forte, désagréable et irritante pour les voies respiratoires et dont l'exposition répétée peut s'avérer dangereuse pour les opérateurs.

Plus spécifiquement, les compositions contenant les polymères ainsi réticulés présentent cette odeur caractéristique de l'acétophénone ce qui requiert un traitement supplémentaire afin de pouvoir la masquer, voire de l'éliminer.

Afin de surmonter les inconvénients causés par l'acétophénone, il a été proposé dans l'état de la technique de remplacer le peroxyde de dicumyle par d'autres agents de réticulation, notamment le 1,3-1,4-bis (tert-butylperoxy isopropyl)benzène qui est un peroxyde organique vendu sous la dénomination commerciale Luperox ®F ou Luperox Vul-Cup®R.

En effet, le 1,3-1,4-bis (tert-butylperoxy isopropyl)benzene présente l'avantage de réticuler efficacement les polymères thermoplastiques et/ou les élastomères, notamment en conduisant à une bonne densité de réticulation ce qui permet d'assurer aux articles obtenus des propriétés thermomécaniques satisfaisantes. Plus spécifiquement, si la densité de réticulation est trop faible, l'article ou le produit obtenu est susceptible de présenter entre autres une résistance à la rupture et à la déchirure insuffisantes. Compte tenu de ces avantages, le 1,3-1,4-bis (tert-butylperoxy isopropyl)benzène est de plus en plus souvent utilisé dans la fabrication d'articles obtenus à partir de la réticulation de caoutchouc ou de polyoléfine.

Toutefois, le 1,3-1,4-bis (tert-butylperoxy isopropyl)benzène présente un certain nombre d'inconvénients par rapport au peroxyde de dicumyle.

En effet, la réticulation des polymères en présence du 1,3-1,4-bis (tert-butylperoxyisopropyl)benzène au cours des procédés de moulage doit être mise en œuvre à des températures plus élevées, par exemple de l'ordre de 180°C, que celles utilisées pour le peroxyde de dicumyle, typiquement de l'ordre de 170°C, afin d'obtenir une productivité et un temps de production similaires qui seraient notamment satisfaisants d'un point de vue industriel.

Cependant, il a été constaté que le fait d'opérer à des températures plus élevées, de l'ordre de 180°C, à cause de la stabilité thermique du 1,3-1,4-bis (tert-butylperoxyisopropyl)benzène, peut induire des problèmes d'encrassement des moules de fabrication et impacter sur la qualité des articles obtenus.

En effet, à ces températures, les polymères thermoplastiques et/ou élastomères réticulables peuvent se dégrader chimiquement ce qui peut limiter leur réticulation induisant, d'une part, des dépôts de résidus de polymères non réticulés au fond des moules de fabrication provoquant leur encrassement et, d'autre part, des articles dont les propriétés ne sont pas satisfaisantes car leurs surfaces n'ont pas été entièrement réticulées.

Par exemple, à des températures de l'ordre de 180°C, il a notamment été constaté, d'une part, que l'EVA a tendance à se décomposer chimiquement et à relarguer de faibles quantités d'acide acétique et, d'autre part, que la vitesse d'inhibition de l'oxygène s'accélère. Ainsi la formation d'acide acétique combinée à l'inhibition de l'oxygène vont conjointement gêner la génération *in situ* de radicaux libres résultant de la décomposition du 1,3-1,4-bis (tertbutylperoxyisopropyl)benzène et vont, par conséquent, limiter la réticulation de l'EVA. Dans ce cas, la surface de l'article obtenu se retrouve non seulement insuffisamment réticulée mais également jaunie à cause de la décomposition de l'EVA. De plus, les moules de fabrication sont encrassés par le dépôt collant de résidus d'EVA non réticulés.

En d'autres termes, l'emploi de températures plus élevées que celles mises en œuvre pour décomposer thermiquement le peroxyde de dicumyle conduit à un certain nombre d'inconvénients qui se traduisent par une perte de productivité, due à la nécessité de laver régulièrement les moules de fabrication encrassés, une réduction de leur durée de vie, due à la fréquence des cycles de lavage des moules de fabrication, et une mauvaise qualité des articles ou produits obtenus, en particulier de leurs surfaces qui sont notamment jaunies lors de l'emploi d'EVA.

En particulier, dans le cas de l'EVA, la dégradation des propriétés thermomécaniques recherchées peut s'accompagner d'un défaut de jaunissement des articles et les moules de fabrication peuvent être encrassées par un dépôt jaunâtre d'EVA.

Les propriétés non satisfaisantes des articles obtenus sont plus particulièrement observées dans la confection d'articles appartenant au domaine de la chaussure, notamment des semelles de chaussure en mousse, ce qui est problématique car les propriétés d'élasticité, de résistance au fluage et/ou de rigidité sont très recherchées.

Ainsi l'un des objectifs de la présente invention est de proposer une composition ayant de bonnes propriétés de réticulation, notamment en conférant une vitesse et une densité de réticulation satisfaisantes, afin d'obtenir un article doté de propriétés thermomécaniques adaptées aux applications recherchées tout en minimisant les problèmes d'encrassement des moules de fabrication susceptibles d'affecter la productivité des procédés de moulage, la durée de vie des moules de fabrication et les propriétés finales dudit article.

En d'autres termes, il existe un réel besoin de proposer une composition capable de réticuler efficacement des polymères réticulables, notamment des polymères thermoplastiques et/ou élastomères, dans des conditions opératoires similaires à celles mises en œuvre pour le 1,3-1,4-bis (tert-butylperoxyisopropyl)benzène tout en minimisant les risques d'encrassement des moules de fabrication.

Au vu de ce qui précède, l'invention a plus particulièrement pour objectif de proposer une composition destinée à améliorer la vitesse de réticulation et/ou la densité de réticulation des polymères réticulables, notamment les polymères thermoplastiques et/ou des polymères élastomères, tels que les copolymères d'éthylène et d'acétate de vinyle, tout en réduisant les risques d'encrassement des moules de fabrication prolongeant de cette façon leur durée de vie.

La présente invention a donc notamment pour objet une composition comprenant au moins un mélange de peroxydes organiques contenant :
- le 1,3-1,4-bis (tert-butylperoxy isopropyl)benzène et
- au moins un deuxième peroxyde organique ayant une température de demi-vie à une (1) minute allant de 130 à 170°C, préférentiellement allant de 135 à 165°C, et plus préférentiellement allant de 142°C à 160°C.

La composition selon l'invention présente ainsi l'avantage de réticuler efficacement des polymères réticulables, notamment en conduisant à une vitesse et une densité de réticulation satisfaisantes, tout en minimisant les risques d'encrassement des moules de fabrication susceptibles d'affecter la productivité des procédés de moulage, la durée de vie des moules de fabrication et les propriétés finales de l'article obtenu.

En d'autres termes, la composition selon l'invention permet d'augmenter la vitesse et/ou la densité de réticulation des polymères réticulables, notamment des polymères thermoplastiques et/ou des polymères élastomères, en particulier des polyoléfines, tout en réduisant les problèmes d'encrassement survenant dans les moules de fabrication.

Plus particulièrement, la composition selon l'invention permet notamment d'améliorer la vitesse de réticulation des polymères réticulables, notamment des polymères thermoplastiques et/ou des polymères élastomères, par rapport à l'utilisation du 1,3-1,4-bis (tertbutylperoxyisopropyl)benzène seul.

La composition selon l'invention présente l'avantage d'augmenter spécifiquement la vitesse de réticulation des polymères réticulables au début de la réticulation tout en induisant une bonne densité de réticulation.

Ainsi la composition selon l'invention permet de réduire les problèmes d'encrassement des moules de fabrication par rapport à l'utilisation du 1,3-1,4-bis (tert-butylperoxyisopropyl)benzène seul.

L'invention est également relative à l'utilisation de la composition selon l'invention telle que définie précédemment pour la réticulation d'un ou plusieurs polymères réticulables, de préférence un ou plusieurs polymères thermoplastiques et/ou un ou plusieurs polymères élastomères.

En particulier, la composition permet d'améliorer la vitesse et/ou la densité de réticulation d'un ou plusieurs polymères réticulables tels que définis ci-avant.

De la même façon, l'invention porte sur une composition comprenant au moins le mélange de peroxydes organiques, tel que décrit précédemment, et au moins un polymère réticulable, de préférence au moins un polymère thermoplastique et/ou au moins un polymère élastomère.

Dans ce cas, la composition comprenant en outre au moins un polymère réticulable est une composition réticulable, i.e. que le mélange de peroxydes organiques est susceptible de réticuler le ou les polymères réticulables à une température donnée en générant *in situ* des radicaux libres capables d'engendrer la réticulation desdits polymères.

Ainsi la composition réticulable permet de conduire à des compositions réticulées aboutissant à de bonnes propriétés de l'article recherché avec une productivité importante.

De même, l'invention a trait à une composition sous forme de mousse (ou susceptible de générer de la mousse) obtenue par réticulation de la composition selon l'invention comprenant en outre un ou plusieurs polymères réticulables.

En d'autres termes, la composition, obtenue à partir de la réticulation du mélange de peroxydes organiques tels que définis ci-avant et du ou des polymères réticulables, est une mousse ou génère de la mousse.

Par ailleurs, la présente invention concerne également un procédé de fabrication de tout ou partie d'un article, de préférence un article appartenant à l'industrie du tapis de sol ou de la chaussure, encore préférentiellement de la chaussure, notamment de semelles, comprenant une étape de réticulation de la composition réticulable selon l'invention, i.e. comprenant en outre au moins un polymère réticulable.

Le procédé selon l'invention présente l'avantage de conduire à un article ayant de bonnes propriétés thermomécaniques, notamment une élasticité et une résistance au fluage satisfaisantes, et dont l'aspect surfacique est amélioré.

De même, un autre objet de l'invention porte sur l'article dont tout ou partie est obtenu par le procédé précédemment décrit, i.e. par la réticulation de la composition selon l'invention comprenant en outre un ou plusieurs polymères réticulables.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression « un ou plusieurs ».

### Composition pour la réticulation

Comme indiqué précédemment, la composition selon l'invention comprend le 1,3-1,4-bis (tert-butylperoxy isopropyl)benzène et au moins un deuxième peroxyde organique ayant une température de demi-vie à une minute allant de 130 à 170°C, préférentiellement allant de 135°C à 165°C, et plus préférentiellement allant de 142°C à 160°C.

Par « *peroxyde organique* », on entend un composé organique, c'est-à-dire contenant du carbone, comportant au moins un groupe -O-O- (deux atomes d'oxygène liés par une liaison covalente simple).

Durant le procédé de réticulation, le peroxyde organique se décompose au niveau de sa liaison instable O-O en radicaux libres. Ces radicaux libres permettent la création des liaisons de réticulation.

Le 1,3-1,4-bis (tert-butylperoxy isopropyl)benzène est un peroxyde organique vendu sous la dénomination commerciale Luperox ®F ou Luperox Vul-Cup®R par la société Arkema.

De préférence, le 1,3-1,4-bis (tert-butylperoxy isopropyl) benzène est présent dans la composition dans une teneur allant de 1 à 80% en poids, de préférence dans une teneur allant de 30 à 70% en poids, plus préférentiellement dans une teneur allant de 40% à 70% en poids, par rapport au poids total de la composition.

Le deuxième peroxyde organique présente une température de demi-vie à une minute allant de 130°C à 170°C, préférentiellement allant de 135°C à 165°C, et plus préférentiellement allant de 142°C à 160°C.

Le terme « température de demi-vie à une minute » représente la température pour laquelle la moitié du peroxyde organique s'est décomposée en un temps donné d'une minute. Classiquement, la « température de demi-vie à une minute » est mesurée dans du n-décane ou le n-dodécane.

De préférence, le deuxième peroxyde organique est choisi dans le groupe constitué par les peroxydes de dialkyle, les peroxydes d'aryle, les peroxyesters, les monoperoxycarbonates, les peroxydes de diacyles, les diperoxycétals, les peroxydes hemipercetals, les peroxydes cycliques et leurs mélanges.

Plus préférentiellement, le deuxième peroxyde organique est choisi dans le groupe constitué par les peroxycétals.

A titre d'exemple de peroxyesters, on peut citer le t-butyl peroxy-2-éthylhexanoate (Luperox® 26), le tertbutylperoxyisobutyrate (Luperox® 80) ; le t-butyl peroxyacétate (Luperox® 7), le t-amyl peroxyacétate (Luperox® 555), le t-butyl perbenzoate (Luperox P), le t-amyl perbenzoate (Luperox TAP), le tertbutylperoxy-3,5,5-trimethylhexanoate (Luperox® 270) et le tertamylperoxy-3,5,5-trimethylhexanoate (Luperox® 570).

A titre d'exemple de monoperoxycarbonates, on peut citer le OO-t-butyl 1-(2-éthylhexyl)monoperoxycarbonate (Luperox® TBEC), OO-t-amyl 1-(2-éthylhexyl)monoperoxycarbonate (Luperox® TAEC), le OO-tert-amyl peroxyisopropyle monoperoxycarbonate (TAIC) et le OO-tert-butyl peroxy isopropyle monoperoxycarbonate (TBIC).

A titre d'exemple de peroxyde hemipercetal, on peut citer le 1,1-dimethylpropyl1-methoxycyclohexylperoxide (Luperox® V10).

A titre d'exemple de diperoxycétals, on peut citer le 1,1-di-(t-butylperoxy)-3,3,5- triméthylcyclohexane (Luperox® 231), 1,1-di-(t-amylperoxy)-3,3,5- triméthylcyclohexane (Luperox® 531), le 1-1-ditertbutylperoxycyclohexane (Luperox® 331), le 2,2-di (tertamylperoxy)butane (Luperox® 520), le 2,2-di (tert-butylperoxy)butane (Luperox® 220) et leur mélange.

Encore plus préférentiellement, le deuxième peroxyde organique est le 1,1'-di-(t-butylperoxy)-3,3,5-triméthylcyclohexane vendu sous la dénomination commerciale Luperox® 231.

De préférence, le deuxième peroxyde organique est présent dans la composition dans une teneur allant de 20 à 99% en poids, de préférence dans une teneur allant de 30 à 70% en poids, de préférence dans une teneur allant de 30 à 60% en poids, par rapport au poids total de la composition.

Avantageusement, le rapport pondéral entre le deuxième peroxyde organique, préférentiellement choisi dans le groupe constitué par les peroxycétals, et le 1,3-1,4-bis (tert-butylperoxy isopropyl)benzène est supérieur ou égal à 0,25, de préférence supérieur à 0,4.

Avantageusement, le rapport pondéral entre le deuxième peroxyde organique, préférentiellement choisi dans le groupe constitué par les peroxycétals, et le 1,3-1,4-bis (tert-butylperoxy isopropyl)benzène est inférieur ou égal à 2, de préférence inférieur ou égal à 1,5.

De préférence, le rapport pondéral entre le deuxième peroxyde organique, préférentiellement choisi dans le groupe constitué par les peroxycétals et le 1,3-1,4-bis (tert-butylperoxy isopropyl)benzène varie dans la gamme allant de 0,4 à 1,5.

Le contrôle du rapport pondéral dans les gammes indiquées ci-avant permet d'obtenir une augmentation de la vitesse de réticulation des polymères tout en assurant une bonne densité de réticulation.

De préférence, la composition selon l'invention comprend en outre au moins un nitroxyde.

Le nitroxyde est préférentiellement choisi dans le groupe constitué de 2,2,6,6-tétraméthyl-1-pipéridinyloxy (généralement commercialisé sous la dénomination commerciale TEMPO), le 4-hydroxy 2,2,6,6-tétraméthyl-1-pipéridinyloxy (généralement commercialisé sous la dénomination commerciale 4-hydroxy-TEMPO), le 4-méthoxy 2,2,6,6-tétraméthyl-lpipéridinyloxy (généralement commercialisé sous la dénomination commerciale 4-méthoxy-TEMPO), le 4-oxo-2,2,6,6-tétraméthyl-1-pipéridinyloxy (communément appelé 4-oxo-TEMPO), le 2,2,5,5 tétraméthyl-1-pyrrolidinyloxy, le bis (1-oxyl- 2,2,6,6 tétraméthylpipéridine-4-yl) sébaçate (commercialisé sous la marque CXA 5415 par la société Ciba Specialty Chemical), le 1-pipéridinyloxy-4,4'-(1,10dioxo1,10-decanediyl)bis(oxy))bis(2,2,6,6-tetramethyl-) (communément appelé sébaçate de di-TEMPO), le 2,2,6,6-tétraméthyl-4- hydroxypipéridine-1-oxyl monophosphonate et le 3-carboxy-2,2,5,5- tétraméthylpirrolidinyloxy (communément appelé 3-carboxyproxyl).

De préférence, le nitroxyde est le 4-hydroxy 2,2,6,6-tétraméthyl-1-pipéridinyloxy (4-hydroxy-TEMPO) ou le 1-piperidinyloxy-4,4'-(1,10-dioxo1,10-decanediyl)bis(oxy))bis(2,2,6,6-tetraméthyl-) (sébaçate de di-TEMPO).

Plus préférentiellement encore, le nitroxyde est le 4-hydroxy 2,2,6,6-tétraméthyl-1-pipéridinyloxy (4-hydroxy-TEMPO).

Avantageusement, le rapport pondéral entre le deuxième peroxyde organique et le nitroxyde est supérieure ou égal à 1, de préférence varie dans la gamme allant de 1 à 50, plus préférentiellement varie dans la gamme allant de 5 à 20, et encore préférentiellement dans une gamme allant de 8 à 13.

Selon un mode de réalisation préférentiel, la composition selon l'invention comprend le 1,3-1,4-bis (tert-butylperoxy isopropyl)benzène, un deuxième peroxyde organique choisi dans le groupe constitué par les peroxycétals et au moins un nitroxyde correspondant au 4-hydroxy 2,2,6,6-tétraméthyl-1-pipéridinyloxy (4-hydroxy-TEMPO).

Conformément à ce mode de réalisation, le deuxième peroxyde organique est de préférence le 1,1'-di-(t-butylperoxy)-3,3,5-triméthylcyclohexane.

La composition ainsi définie correspond à une composition destinée à la réticulation d'un ou plusieurs polymères réticulables.

En particulier, la composition ainsi définie correspond à un mélange comprenant le 1,3-1,4-bis (tert-butylperoxy isopropyl)benzène et au moins un deuxième peroxyde organique ayant une température de demi-vie à une minute allant de 130 à 170°C, préférentiellement allant de 135°C à 165°C, et plus préférentiellement allant de 142°C à 160°C.

Ainsi le mélange reprend toutes les caractéristiques de la composition destinée à la réticulation.

De préférence, le mélange comprend en outre au moins un nitroxyde.

### Composition réticulable

La présente invention se rapporte également à une composition selon l'invention comprenant une composition telle que définie ci-avant et en outre un ou plusieurs polymères réticulables.

La composition ainsi définie correspond à une composition réticulable.

En particulier, la composition ainsi définie comprend le mélange précédemment défini et en outre un ou plusieurs polymères réticulables.

Plus préférentiellement, le ou les polymères réticulables est ou sont choisi(s) dans le groupe constitué par les polymères thermoplastiques, les polymères élastomères et leurs mélanges.

De préférence, le ou les polymères réticulables est ou sont des polyoléfines.

Par « polyoléfine », on entend au sens de la présente invention un polymère dérivé d'une oléfine, par exemple l'éthylène, le propylène, le butène, l'hexène, etc.

Par « dérivé de », on entend au sens de la présente invention que les motifs de la chaîne principale du polymère et/ou des chaînes adjacentes (ou chaînes pendantes) du polymère résultent de la polymérisation ou de la copolymérisation des monomères à partir desquels le polymère est fabriqué.

Par « polyoléfine élastomère » (POE), on entend au sens de la présente invention un polymère élastomère dérivé d'une oléfine, par exemple de l'éthylène, le propylène, le butène, l'hexène, etc.

Par « élastomère », on entend au sens de la présente invention un polymère capable de subir à température ambiante une déformation uniaxiale, de préférence d'au moins 20% pendant une durée de quinze minutes, et de reprendre sa forme initiale, de préférence avec une déformation résiduelle inférieure à 5% par rapport à sa forme initiale, lorsque cette contrainte ne s'exerce plus.

Les polymères thermoplastiques et/ou élastomères utilisés dans la composition selon l'invention peuvent être définis comme des polymères naturels ou synthétiques qui ont un caractère thermoplastique et/ou élastomère et qui peuvent être réticulés (durcis) sous l'action d'un agent de réticulation. Dans Rubber World, "Elastomer Crosslinking with Diperoxyketals", octobre 1983, pages 26-32, et dans Rubber and Plastic News, "Organic Peroxides for Rubber Crosslinking", 29 septembre 1980, pages 46-50, on décrit l'action de réticulation et des polymères réticulables. Des polyoléfines qui conviennent à la présente invention sont décrites dans Modem Plastics Encyclopedia 89, pages 63-67, 74-75.

A titre d'exemple de polymères et/ou élastomères, on peut citer le polyéthylène linéaire de faible densité, le polyéthylène de faible densité (LDPE), le polyéthylène de densité élevée (HDPE), le polyéthylène chloré, les terpolymères d'éthylène-propylène-diène (EPDM), les copolymères d'éthylène-acétate de vinyle (EVA), les copolymères d'éthylène propylène, ), les copolymères d'éthylène et de butène, le caoutchouc de silicone, le caoutchouc naturel (NR), le polyisoprène (IR), le polybutadiène (BR), les copolymères acrylonitrile-butadiène (NBR), les copolymères styrène-butadiène (SBR), le polyéthylène chlorosulfoné ou les fluoroélastomères, les copolymères d'éthylène et (méth) acrylate de méthyle, les copolymères d'éthylène et de méthacrylate de glycidyle et leurs mélanges.

Selon un mode de réalisation, les polymères réticulables sont dépourvus de groupes fonctionnels chlore et de groupes fonctionnels acide carboxylique, de préférence dépourvu de groupe fonctionnels halogène et de groupes fonctionnels acide carboxylique.

De préférence, les polymères réticulables sont choisis dans le groupe constitué par les copolymères d'éthylène et d'acétate de vinyle (EVA), les copolymères d'éthylène et de butène, le polyéthylène, du caoutchouc et leurs mélanges.

Préférentiellement, les polymères réticulables sont choisis dans le groupe constitué par :
- les copolymères d'éthylène et d'acétate de vinyle (EVA),
- un mélange comprenant les copolymères d'éthylène et d'acétate de vinyle (EVA) et le polyéthylène avec du caoutchouc,
- un mélange comprenant les copolymères d'éthylène et d'acétate de vinyle (EVA) et les copolymères d'éthylène et de butène.

Plus préférentiellement, les polymères réticulables sont choisis dans le groupe constitué par le polyéthylène, les copolymères d'éthylène et d'acétate de vinyle (EVA) et leurs mélanges.

Plus préférentiellement, les polymères réticulables sont des copolymères d'éthylène et d'acétate de vinyle (EVA).

La quantité d'acétate de vinyle peut varier de 0,1 à 50% en poids, en particulier de 5 à 50% en poids, plus particulièrement de 10 à 50%, notamment de 15 à 45% en poids par rapport au poids total du copolymère.

Les copolymères d'éthylène et d'acétate de vinyle (EVA) peuvent être modifiés par des méthodes connus dans l'état de la technique, incluant une modification avec des acides carboxyliques insaturés et leurs dérivés, tels que l'acide maléique ou l'anhydride maléique.

Préférentiellement, les copolymères d'éthylène et d'acétate de vinyle présentent un indice de fluidité à l'état fondu (Melt Flow Index en langue anglaise, appelé MFI) allant de 0,1 à 60g/10 minutes.

L'indice de fluidité à l'état fondu (MFI) des copolymères d'éthylène et d'acétate de vinyle est mesuré conformément aux méthodes couramment utilisées pour caractériser les matériaux thermoplastiques permettant d'obtenir des informations sur l'extrudabilité ainsi que les possibilités de mise en forme du matériau telles que celles décrites dans la norme ASTM D1238, la norme NF T51-016 ou la norme ISO 1133.

Les valeurs de MFI auxquelles il est fait référence sont déterminées selon la norme ASTM D1238 à une température de 190°C sous une charge de 2,16 kg (unités exprimées en g/10 minutes).

Le polyéthylène peut inclure des homopolymères et des copolymères tels que le polyéthylène linéaire de faible densité, le polyéthylène de faible densité (LDPE), le polyéthylène de densité élevée (HDPE), le polyéthylène chloré, les terpolymères d'éthylène-propylène-diène (EPDM).

Selon un mode de réalisation, les polymères réticulables peuvent être choisis dans le groupe constitué par les copolymères d'éthylène et d'acétate de vinyle ou un mélange contenant du polyéthylène, du caoutchouc ou un copolymère d'éthylène/butène.

Le mélange de peroxydes organiques tel que défini précédemment représente de préférence entre 0.5 à 5 parties et avantageusement entre 1 et 3 parties pour 100 parties en poids de polymère.

La composition selon l'invention peut en outre comprendre une ou plusieurs charges renforçantes choisies dans le groupe constitué par la silice, le carbonate de calcium, le kaolin et leurs mélanges, de préférence le kaolin ou un mélange de carbonate de calcium et de silice, encore préférentiellement le kaolin.

La ou les charges renforçantes peuvent être présentes dans la composition dans une teneur allant de 1 à 60%, notamment de 10 à 50% en poids, par rapport au poids total de la composition.

La composition selon l'invention peut comprendre en outre au moins un peroxyde organique différent du mélange de peroxydes organiques définis précédemment.

De préférence, la composition est exempte d'un peroxyde organique différent du mélange de peroxydes organiques définis précédemment.

### Utilisation

Conformément à la présente invention, la composition telle que décrite précédemment est utilisée pour la réticulation d'au moins un polymère réticulable tel que défini précédemment, de préférence choisi dans le groupe constitué par le polyéthylène, les copolymères d'éthylène et d'acétate de vinyle (EVA) et leurs mélanges.

Ainsi, la présente invention se rapporte à l'utilisation d'une composition telle que définie ci-avant pour la réticulation d'un ou polymères réticulables tel(s) que défini(s) ci-avant.

En d'autres termes, la présente invention se rapporte notamment à l'utilisation du mélange tel que défini ci-avant pour la réticulation d'un ou polymères réticulables tel(s) que défini(s) ci-avant.

Plus préférentiellement, les polymères réticulables sont choisis dans le groupe constitué par les copolymères d'éthylène et d'acétate de vinyle (EVA).

Par « *réticulation* », on entend la formation d'un réseau tridimensionnel par la création de liaisons entre les molécules de polymères réticulables. L'utilisation selon l'invention s'effectue donc de préférence dans le contexte d'un procédé de réticulation, au cours duquel la réticulation s'opère.

En particulier, la composition selon l'invention est utilisée pour augmenter la vitesse de réticulation d'au moins un polymère réticulable tel que défini précédemment, de préférence un polymère réticulable choisi dans le groupe constitué par les copolymères d'éthylène et d'acétate de vinyle (EVA).

Par ailleurs, la composition selon l'invention permet de conduire à une bonne densité de réticulation.

La densité de réticulation est liée au nombre de liaisons pontales par motif constitutif du polymère. Elle peut être déterminée par une mesure rhéométrique, par exemple à l'aide d'un rhéomètre. Par exemple elle peut être déterminée selon la norme ASTM D 5289A à l'aide d'un rhéomètre de type RPA 2000 ou MDR, à une température de 160°C, avec une amplitude d'oscillation de 0,5°, une fréquence d'oscillation de 1,667 Hz, à partir de disques de l'échantillon à tester de 3,5 cm de diamètre et de 4,8 cm³ de volume.

Selon les systèmes de réticulation, un ajustement de la température à une valeur différente peut être approprié.

La mesure est réalisée au cours de la réticulation de l'échantillon à tester qui est initiée en même temps que la mesure, en plaçant l'échantillon dans une cavité de test préchauffée. Elle permet l'obtention d'une courbe rhéométrique représentant l'évolution du couple viscoélastique résultant de la déformation imposée à la composition à tester en fonction du temps. Dans le cadre de la présente demande, la densité de réticulation est définie directement par la différence entre le couple maximal MH et le couple minimal ML, et est exprimée en dN m.

Le couple minimal ML correspond à la valeur minimale du couple mesurée pendant la réticulation (au début du test).

Le couple maximal MH correspond à la valeur du couple à la fin de la mesure. De préférence, la durée du test est ajustée de telle sorte que la réticulation soit essentiellement achevée à l'issue de cette durée, le couple atteignant alors un plateau. Une durée appropriée pour le test est par exemple de 60 minutes. Toutefois, cette durée peut être adaptée en fonction de la durée réelle prévue pour la fabrication d'une pièce donnée, à partir de la composition de polymère réticulable, et à une température donnée.

La vitesse de réticulation est évaluée par la valeur T90 correspondant au temps nécessaire pour atteindre 90 % du couple maximal, qui est obtenue à l'aide de la mesure rhéométrique décrite ci-dessus. Plus T90 est faible, plus la vitesse de réticulation est élevée.

Selon un mode de réalisation particulier, la vitesse de réticulation obtenue avec la composition selon l'invention comprenant le mélange de peroxydes organiques tels que décrits précédemment est supérieure à la vitesse de réticulation qui est obtenue dans les mêmes conditions avec une composition comprenant le 1,3-1,4-bis (tert-butylperoxy isopropyl)benzène en tant qu'agent de réticulation.

De préférence, la vitesse de réticulation lors du procédé de réticulation est supérieure à 1,1 fois, 1,2 fois, 1,3, 1,4 fois ou 1,5 fois la vitesse de réticulation qui est obtenue dans les mêmes conditions avec une composition comprenant le 1,3-1,4-bis (tert-butylperoxy isopropyl)benzène en tant qu'agent de réticulation.

Par « mêmes conditions avec une composition comprenant le 1,3-1,4-bis (tert-butylperoxy isopropyl)benzène en tant qu'agent de réticulation », on entend une réticulation effectuée avec les mêmes paramètres (la même durée, la même température, etc...) et à partir de la même composition, à l'exception du fait qu'elle comporte le 1,3-1,4-bis (tert-butylperoxy isopropyl)benzène en tant qu'agent de réticulation au lieu du mélange de peroxydes organiques tels que définis ci-avant.

Ainsi la composition selon l'invention permet en particulier d'augmenter la vitesse de réticulation par rapport à une composition comprenant le 1,3-1,4-bis (tert-butylperoxy isopropyl)benzène en tant peroxyde organique utilisé comme agent de réticulation.

En particulier, l'invention se rapporte à l'utilisation d'une composition telle que définie ci-dessus pour la fabrication de tout ou partie d'un article, en particulier un article en mousse. De préférence, ledit article appartient à l'industrie de la chaussure et des tapis de sols, encore préférentiellement ledit article appartient à l'industrie de la chaussure, et encore préférentiellement est une semelle de chaussure.

### Composition sous forme de mousse

Comme indiquée ci-avant, l'invention concerne une composition sous forme de mousse obtenue à partir de la réticulation de la composition selon l'invention telle que définie ci-avant comprenant en outre un ou plusieurs polymères réticulables, de préférence choisi dans le groupe constitué par le polyéthylène, les copolymères d'éthylène et d'acétate de vinyle (EVA) et leurs mélanges.

Plus préférentiellement, les polymères réticulables sont choisis dans le groupe constitué par les copolymères d'éthylène et d'acétate de vinyle (EVA).

Ainsi la composition sous forme de mousse correspond à la composition réticulée selon l'invention.

Par « composition sous forme de mousse », on entend au sens de la présente invention que la composition est une mousse ou est susceptible de générer une mousse.

De préférence, la composition sous forme de mousse comprend au moins un copolymère d'éthylène et d'acétate de vinyle réticulé.

En d'autres termes, dans le cas de ce mode préférentiel, la composition est une mousse comprenant au moins un copolymère d'éthylène et d'acétate de vinyle réticulé.

De préférence, le copolymère d'éthylène et d'acétate de vinyle est présent dans une teneur allant de 70 à 99% en poids, particulièrement dans une teneur allant de 72 à 98% en poids, et encore plus préférentiellement dans une teneur allant de 75 à 95% en poids, par rapport au poids total de la composition.

La composition sous forme de mousse peut comprendre au moins un agent gonflant organique ou inorganique.

De préférence, l'agent gonflant organique peut être choisi dans le groupe constitué par l'azodicarbonamide, l'azobisisobutyronitrile, le diazoaminobenzene, le N-N-dimethyl-N,N-dinitrosoterephthalamide, le N,N-dinitroso- pentaméthylène-tétramine, le P-toluène sulfonyl hydrazide et le p.p'-oxybis (benzènesulfonylhydrazide), le 4,4'-oxybis benzene sulfonyl hydrazide; le p-toluene sulfonyl semicarbizide, l' azodicarboxylate de baryum, le butylamine nitrile, le trihydrazino triazine bicarbonate d'ammonium, le sodium bicarbonate et des mélanges de ceux-ci.

De préférence, l'agent gonflant minéral peut être choisi dans le groupe constitué par le bicarbonate d'ammonium, le sodium bicarbonate et des mélanges de ceux-ci.

### Procédé de réticulation

La présente invention concerne également un procédé de réticulation d'au moins un polymère réticulable comprenant une étape de réticulation d'au moins un polymère réticulable tel que défini précédemment, en présence de la composition pour la réticulation telle que définie précédemment.

En d'autre termes, l'étape de réticulation d'au moins un polymère réticulable est réalisée par mise en contact dudit polymère réticulable et de la composition pour la réticulation telle que définie précédemment.

Plus préférentiellement, les polymères réticulables sont choisis dans le groupe constitué par les copolymères d'éthylène et d'acétate de vinyle (EVA).

De préférence, la température de réticulation est comprise entre 140°C et 210°C, de préférence entre 150 et 190°C, et de préférence entre 165 et 190°C.

De préférence, l'étape de réticulation se déroule pendant une durée allant de 2 à 10 minutes, de préférence pendant une durée allant de 3 à 8 minutes.

Ainsi la composition selon l'invention permet de mettre en œuvre un procédé de réticulation des polymères réticulables à des températures pouvant allant jusqu'à 190°C sans les dégrader ou encrasser le moule dans lequel la réticulation a lieu.

### Procédé de fabrication de tout ou partie d'un article

La présente invention concerne également un procédé de fabrication de tout ou partie d'un article, de préférence un article appartenant à l'industrie de la chaussure, comprenant une étape a) de réticulation de la composition tel que définie ci-dessus.

De préférence, le procédé de fabrication selon l'invention est un procédé de moulage, en particulier de moulage par injection.

De préférence, le procédé de fabrication selon l'invention comprend une étape b) de moulage par injection de la composition obtenue à la suite de la réticulation.

En particulier, le procédé de fabrication selon l'invention permet de conduire à une composition sous forme de mousse qui est injectée par moulage afin de former tout ou partie d'un article, de préférence un article appartenant à l'industrie de la chaussure.

De préférence, le procédé selon l'invention comprend également la mise en forme de la composition sous forme de mousse pour conduire à tout ou partie de l'article.

### Article

L'invention porte aussi sur un article dont tout ou partie est obtenue par le procédé précédemment décrit.

De préférence, l'article est un article en mousse.

De préférence, l'article appartient à l'industrie des tapis de sol ou de la chaussure, de préférence de la chaussure, plus préférentiellement l'article est une semelle de chaussure.

Encore plus préférentiellement, la semelle est choisie dans le groupe constitué par une semelle intérieure, une semelle intercalaire ou une semelle externe.

### Exemple :

L'exemple suivant sert à illustrer l'invention sans toutefois présenter un caractère limitatif.

### 1. Compositions testées

Les compositions suivantes ont été préparées à partir des ingrédients indiqués dans le tableau 1 ci-après. Les quantités sont indiquées en partie par cent parties (phr) de copolymère d'éthylène et acétate de vinyle (EVA).

| | A | B | c | D |
|---|---|---|---|---|
| Luperox® F | 0,4 phr | 0,48 phr | 0,56 phr | 0,72 phr |
| Luperox® 231 | 1,28 phr | 0,96 phr | 0,64 phr | - |
| OH-tempo | 0,128 phr | 0,096 phr | 0,064 phr | 0,064 phr |

| | | | | |
|---|---|---|---|---|
| Luperox® F = 1,3-1,4-bis (tert-butylperoxy isopropyl)benzène Luperox® 231 = l,l-di-(t-butylperoxy)-3,3,5-triméthylcyclohexane OH-tempo = 4-hydroxy 2,2,6,6-tétraméthyl-1-pipéridinyloxy | | | | |

Les compositions ont ainsi été préparées dans un mélangeur interne Haake à une température de 35°C pendant une durée de 15 minutes, en utilisant une vitesse d'agitation de 50 tours/min.

Le mélange polymère est ensuite passé à travers un broyeur ouvert réglé à une température de 25 °C pour produire des feuilles d'environ 2 mm d'épaisseur.

Des échantillons d'environ 2 à 3 grammes des compositions ci-dessus sont déposés dans une plaque sur un rhéomètre à filière mobile (MDR) fourni par GOTECH, qui est capable de mesurer les propriétés de durcissement des échantillons et comprend un logiciel pour analyser les résultats. Chacun des échantillons est placé dans une cavité contrôlée en température entre deux filières, dont la plus basse oscille de manière à appliquer une contrainte ou déformation cyclique à l'échantillon tandis que la filière supérieure est raccordée à un capteur de couple pour mesurer la réponse de couple de l'échantillon à la déformation.

La rigidité est enregistrée en continu en fonction du temps. La rigidité de l'échantillon augmente au fur et à mesure que la vulcanisation se produit.

Cet appareil est capable de fournir, entre autres, des valeurs calculées de ML (couple minimal), MH (couple maximal), et T90 (temps pour obtenir 90% de la densité de réticulation totale) tels que définis par les normes internationales (ASTM D5289 et ISO 6502).

La densité de réticulation est définie directement par la différence entre le couple maximal MH et le couple minimal ML et est exprimée en dN.m.

Le MDR est actionné à une température de 180°C et de 185 °C avec une amplitude d'oscillation (degré de déformation) de 0,5° appliquée à l'échantillon pendant 30 min.

### 2. Résultats

La densité de réticulation et la vitesse de réticulation des différentes compositions ont ainsi été évaluées. Les résultats sont indiqués dans le tableau 2 ci-après :

| | MH (dN.m) | ML (dN.m) | MH-ML (dN.m) | T90 (min:s) |
|---|---|---|---|---|
| Composition A | 3,34 | 0,33 | 3,01 | 5:48 |
| Composition B | 3,32 | 0,30 | 3,02 | 6:09 |
| Composition C | 3,33 | 0,29 | 3,04 | 6:27 |
| Composition D | 3,36 | 0,25 | 3,11 | 7:07 |

Afin de minimiser, voire d'éliminer, les problèmes liés à l'encrassement des moules de fabrication, il est important d'augmenter la vitesse de réticulation du polymère tout en maintenant la même densité de réticulation (MH-ML).

Les compositions A, B et C selon l'invention permettent de réduire le temps de réticulation (T90) par rapport à la composition comparative D contenant le produit Luperox ® F seul tout en conduisant à une densité de réticulation similaire.

Autrement dit, le mélange de peroxydes organiques selon l'invention permet d'induire une réticulation plus rapide au cours de la réticulation (T90) tout en maintenant une densité de réticulation similaire (MH-ML) par rapport à une composition contenant le Luperox ® F en tant qu'agent de réticulation.

## Revendications

1. Composition comprenant au moins un mélange de peroxydes organiques contenant le 1,3-1,4-bis (tert-butylperoxy isopropyl)benzène et au moins un deuxième peroxyde organique ayant une température de demi-vie à une minute allant de 130 à 170°C, préférentiellement allant de 135 à 165°C, et plus préférentiellement allant de 142°C à 160°C.

2. Composition selon la revendication 1, **caractérisée en ce que** le deuxième peroxyde organique est choisi dans le groupe constitué par les peroxydes de dialkyle, les peroxydes d'aryle, les peroxyesters, les monoperoxycarbonates, les peroxydes de diacyles, les diperoxycétals, les peroxydes hemipercetals, les peroxydes cycliques, et leurs mélanges, et de préférence les diperoxycétals.

3. Composition selon la revendication 1 ou 2, **caractérisée en ce que** le deuxième peroxyde organique est choisi dans le groupe constitué par le l,l'-di-(t-butylperoxy)-3,3,5- triméthylcyclohexane, l,l-di-(t-amylperoxy)-3,3,5- triméthylcyclohexane, le 1-1-ditertbutylperoxycyclohexane, le 2,2-di (tert-amylperoxy)butane, le 2,2-di (tert-butylperoxy)butane et leurs mélanges, de préférence est le l,l'-di-(t-butylperoxy)-3,3,5- triméthylcyclohexane.

4. Composition selon l'une quelconque des revendications précédentes, **caractérisée en ce que** le rapport pondéral entre le deuxième peroxyde organique et le 1,3-1,4-bis (tert-butylperoxy isopropyl)benzène est supérieur ou égal à 0,25, de préférence supérieur à 0,4, et encore plus préférentiellement varie dans la gamme allant de 0,4 à 1,5.

5. Composition selon l'une quelconque des revendications précédentes, **caractérisée en ce que** le rapport pondéral entre le deuxième peroxyde organique et le 1,3-1,4-bis (tert-butylperoxy isopropyl)benzène est inférieur ou égal à 2, de préférence inférieur ou égal à 1,5.

6. Composition selon l'une quelconque des revendications précédentes, **caractérisée en ce qu'**elle comprend en outre au moins un nitroxyde, de préférence choisi dans le groupe constitué par le 2,2,6,6-tétraméthyl-1-pipéridinyloxy, le 4-hydroxy 2,2,6, 6-tétraméthyl-1-pipéridinyloxy, le 4-méthoxy 2,2,6,6-tétraméthyl-lpipéridinyloxy, le 4-oxo-2,2,6,6-tétraméthyl-1- pipéridinyloxy, le 2,2,5,5 tétraméthyl-1-pyrrolidinyloxy, le bis (1-oxyl- 2,2,6,6 tétraméthylpipéridine-4-yl) sébaçate, le 1-pipéridinyloxy-4,4'-(1,10dioxo1,10-decanediyl)bis(oxy))bis(2,2,6,6-tetramethyl-), le 2,2,6,6-tétraméthyl-4-hydroxypipéridine-1-oxyl monophosphonate et le 3-carboxy-2,2,5,5-tétraméthylpirrolidinyloxy, encore préférentiellement est le 4-hydroxy 2,2,6,6-tétraméthyl-1-pipéridinyloxy (OH-Tempo) ou le 1-piperidinyloxy-4,4'-(1,10-dioxo1,10-decanediyl)bis(oxy))bis(2,2,6,6-tetraméthyl-), de préférence est le 4-hydroxy 2,2,6,6-tétraméthyl-1-pipéridinyloxy (OH-Tempo).

7. Composition selon la revendication 6, **caractérisée en ce que** le rapport pondéral entre le deuxième peroxyde organique et le nitroxyde est supérieure ou égal à 1, de préférence varie dans la gamme allant de 1 à 50 et plus préférentiellement dans la gamme allant de 5 à 20, et encore préférentiellement dans une gamme allant de 8 à 13.

8. Composition selon l'une quelconque des revendications précédentes, **caractérisée en ce qu'**elle comprend en outre un ou plusieurs polymères réticulables, de préférence choisi(s) dans le groupe constitué par les polymères thermoplastiques, les polymères élastomères et leurs mélanges.

9. Composition selon la revendication 8, **caractérisée en ce que** le ou les polymères réticulables est ou sont choisi(s) dans le groupe constitué par le polyéthylène linéaire de faible densité, le polyéthylène de faible densité (LDPE), le polyéthylène de densité élevée (HDPE), le polyéthylène chloré, les terpolymères d'éthylène-propylène-diène (EPDM), les copolymères d'éthylène et d'acétate de vinyle (EVA), les copolymères d'éthylène propylène, le caoutchouc de silicone, le caoutchouc naturel (NR), le polyisoprène (IR), le polybutadiène (BR), les copolymères acrylonitrilebutadiène (NBR), les copolymères styrène-butadiène (SBR), le polyéthylène chlorosulfoné ou les fluoroélastomères, les copolymères d'éthylène et (méth) acrylate de méthyle, les copolymères d'éthylène et de méthacrylate de glycidyle et leurs mélanges, de préférence est ou sont choisi(s) dans le groupe constitué par le polyéthylène, les copolymères d'éthylène et d'acétate de vinyle (EVA) et leurs mélanges, de préférence les copolymères d'éthylène et d'acétate de vinyle (EVA).

10. Composition selon l'une quelconque des revendications précédentes, **caractérisée en ce qu'**elle comprend en outre une ou plusieurs charges renforçantes choisies dans le groupe constitué par la silice, le carbonate de calcium, le kaolin et leurs mélanges, de préférence le kaolin ou un mélange de carbonate de calcium et de silice, encore préférentiellement le kaolin.

11. Utilisation d'une composition telle que définie selon l'une quelconque des revendications 1 à 7 et 10 pour la réticulation d'un ou plusieurs polymères réticulables tel(s) que défini(s) selon l'une quelconque des revendications 8 et 9.

12. Utilisation selon la revendication 11, pour augmenter la vitesse de réticulation d'un ou polymères réticulables tel(s) que défini(s) selon l'une quelconque des revendications 8 et 9.

13. Procédé de fabrication de tout ou partie d'un article comprenant une étape de réticulation d'une composition telle que définie selon l'une quelconque des revendications 8 et 9.

14. Utilisation d'une composition telle que définie selon l'une quelconque des revendications 8 à 10 pour la fabrication de tout ou partie d'un article, de préférence un article en mousse.

15. Article dont ou partie est obtenu par le biais du procédé tel que défini selon la revendication 13.

## Patentansprüche

1. Zusammensetzung, umfassend mindestens eine Mischung von organischen Peroxiden, die 1,3-1,4-Bis(tert-butylperoxyisopropyl)benzol und mindestens ein zweites organisches Peroxid mit einer 1-Minuten-Halbwertszeit-Temperatur im Bereich von 130 bis 170 °C, bevorzugt im Bereich von 135 bis 165 °C und weiter bevorzugt im Bereich von 142 °C bis 160 °C, umfasst.

2. Zusammensetzung nach Anspruch 1, **dadurch gekennzeichnet, dass** das zweite organische Peroxid aus der Gruppe bestehend aus Dialkylperoxiden, Arylperoxiden, Peroxyestern, Monoperoxycarbonaten, Diacylperoxiden, Diperoxyketalen, Hemiperketalperoxiden, cyclischen Peroxiden und Mischungen davon und vorzugsweise Diperoxyketalen ausgewählt ist.

3. Zusammensetzung nach Anspruch 1 oder 2, **dadurch gekennzeichnet, dass** das zweite organische Peroxid aus der Gruppe bestehend aus 1,1'-Di(t-butylperoxy)-3,3,5-trimethylcyclohexan, 1,1-Di(t-amyl-peroxy)-3,3,5-trimethylcyclohexan, 1,1-Di(tert-butylperoxy)cyclohexan, 2,2-Di(tert-amylperoxy)-butan, 2,2-Di(tert-butylperoxy)butan und Mischungen davon ausgewählt ist und vorzugsweise 1,1'-Di(t-butylperoxy)-3,3,5-trimethylcyclohexan ist.

4. Zusammensetzung nach einem der vorhergehenden Ansprüche, **dadurch gekennzeichnet, dass** das Gewichtsverhältnis von zweitem organischem Peroxid zu 1,3-1,4-Bis(tert-butylperoxyisopropyl)benzol größer oder gleich 0,25 und vorzugsweise größer als 0,4 ist und noch weiter bevorzugt im Bereich von 0,4 bis 1,5 variiert.

5. Zusammensetzung nach einem der vorhergehenden Ansprüche, **dadurch gekennzeichnet, dass** das Gewichtsverhältnis von zweitem organischem Peroxid zu 1,3-1,4-Bis(tert-butylperoxyisopropyl)benzol kleiner oder gleich 2 und vorzugsweise kleiner oder gleich 1,5 ist.

6. Zusammensetzung nach einem der vorhergehenden Ansprüche, **dadurch gekennzeichnet, dass** sie außerdem mindestens ein Nitroxid umfasst, das vorzugsweise aus der Gruppe bestehend aus 2,2,6,6-Tetramethyl-1-piperidinyloxy, 4-Hydroxy-2,2,6,6-tetramethyl-1-piperidinyloxy, 4-Methoxy-2,2,6,6-tetramethyl-1-piperidinyloxy, 4-Oxo-2,2,6,6-tetramethyl-1-piperidinyloxy, 2,2,5,5-Tetramethyl-1-pyrrolidinyloxy, Bis(1-oxyl-2,2,6,6-tetramethylpiperidin-4-yl)sebacat, 4,4'-[(1,10-dioxo-1,10-decandiyl)bis(oxy)]bis[2,2,6,6-tetramethyl-1-piperidinyloxy], 2,2,6,6-Tetramethyl-4-hydroxypiperidin-1-oxylmonophosphonat und 3-Carboxy-2,2,5,5-tetramethylpyrrolidinyloxy ausgewählt ist, weiter bevorzugt 4-Hydroxy-2,2,6,6-tetramethyl-1-piperidinyloxy (OH-Tempo) oder 4,4'-[(1,10-Dioxo-1,10-decandiyl)bis(oxy)]-bis[2,2,6,6-tetramethyl-1-piperidinyloxy] ist und vorzugsweise 4-Hydroxy-2,2,6,6-tetramethyl-1-piperidinyloxy (OH-Tempo) ist.

7. Zusammensetzung nach Anspruch 6, **dadurch gekennzeichnet, dass** das Gewichtsverhältnis zwischen zweitem organischem Peroxid und Nitroxid größer oder gleich 1 ist und vorzugsweise im Bereich von 1 bis 50 und weiter bevorzugt im Bereich von 5 bis 20 und noch weiter bevorzugt im Bereich von 8 bis 13 variiert.

8. Zusammensetzung nach einem der vorhergehenden Ansprüche, **dadurch gekennzeichnet, dass** sie außerdem ein oder mehrere vernetzbare Polymere umfasst, die vorzugsweise aus der Gruppe bestehend aus thermoplastischen Polymeren, elastomeren Polymeren und Mischungen davon ausgewählt sind.

9. Zusammensetzung nach Anspruch 8, **dadurch gekennzeichnet, dass** das vernetzbare Polymer bzw. die vernetzbaren Polymere aus der Gruppe bestehend aus linearem Polyethylen niederer Dichte, Polyethylen niederer Dichte (LDPE), Polyethylen hoher Dichte (HDPE), chloriertem Polyethylen, Ethylen-Propylen-Dien(EPDM)-Terpolymeren, Copolymeren von Ethylen und Vinylacetat (EVA), Ethylen-Propylen-Copolymeren, Silikonkautschuk, Naturkautschuk (NR), Polyisopren (IR), Polybutadien (BR), Acrylnitril-Butadien-Copolymeren (NBRs), Styrol-Butadien-Copolymeren (SBRs), chlorsulfoniertem Polyethylen oder Fluorelastomeren, Copolymeren von Ethylen und Methyl(meth)acrylat, Copolymeren von Ethylen und Glycidylmethacrylat und Mischungen davon ausgewählt ist bzw. sind, vorzugsweise aus der Gruppe bestehend aus Polyethylen, Copolymeren von Ethylen und Vinylacetat (EVA) und Mischungen davon, vorzugsweise Copolymeren von Ethylen und Vinylacetat (EVA), ausgewählt ist bzw. sind.

10. Zusammensetzung nach einem der vorhergehenden Ansprüche, **dadurch gekennzeichnet, dass** sie außerdem einen oder mehrere verstärkende Füllstoffe umfasst, die aus der Gruppe bestehend aus Kieselsäure, Calciumcarbonat, Kaolin und Mischungen davon, vorzugsweise Kaolin oder einer Mischung von Calciumcarbonat und Kieselsäure, weiter bevorzugt Kaolin, ausgewählt sind.

11. Verwendung einer Zusammensetzung gemäß einem der Ansprüche 1 bis 7 und 10 zur Vernetzung eines oder mehrerer vernetzbarer Polymere gemäß einem der Ansprüche 8 und 9.

12. Verwendung nach Anspruch 11 zur Erhöhung der Vernetzungsgeschwindigkeit eines oder vernetzbarer Polymere gemäß einem der Ansprüche 8 und 9.

13. Verfahren zur Herstellung eines ganzen Gegenstands oder eines Teils eines Gegenstands, umfassend einen Schritt der Vernetzung einer Zusammensetzung gemäß einem der Ansprüche 8 und 9.

14. Verwendung einer Zusammensetzung gemäß einem der Ansprüche 8 bis 10 zur Herstellung eines ganzen Gegenstands oder eines Teils eines Gegenstands, vorzugsweise eines Schaumstoffgegenstands.

15. Gegenstand, von dem oder ein Teil mit Hilfe des Verfahrens gemäß Anspruch 13 erhalten wird.

## Claims

1. Composition comprising at least a mixture of organic peroxides containing 1,3-1,4-bis(tert-butylperoxyisopropyl)benzene and at least a second organic peroxide having a one minute half life temperature ranging from 130 to 170°C, preferentially ranging from 135 to 165°C and more preferentially ranging from 142°C to 160°C.

2. Composition according to Claim 1, **characterized in that** the second organic peroxide is chosen from the group consisting of dialkyl peroxides, aryl peroxides, peroxyesters, monoperoxycarbonates, diacyl peroxides, diperoxyketals, hemiperketals peroxides, cyclic peroxides and their mixtures, and preferably diperoxyketals.

3. Composition according to Claim 1 or 2, **characterized in that** the second organic peroxide is chosen from the group consisting of 1,1'-di(t-butylperoxy)-3,3,5-trimethylcyclohexane, 1,1-di(t-amylperoxy)-3,3,5-trimethylcyclohexane, 1,1-di(tert-butylperoxy)cyclohexane, 2,2-di(tert-amylperoxy)butane, 2,2-di(tert-butylperoxy)butane and their mixtures, and preferably 1,1'-di(t-butylperoxy)-3,3,5-trimethylcyclohexane.

4. Composition according to any one of the preceding claims, **characterized in that** the ratio by weight of the second organic peroxide to 1,3-1,4-bis(tert-butylperoxyisopropyl)benzene is greater than or equal to 0.25, preferably greater than 0.4, and more preferentially still varies within the range extending from 0.4 to 1.5.

5. Composition according to any one of the preceding claims, **characterized in that** the ratio by weight of the second organic peroxide to 1,3-1,4-bis(tertbutylperoxyisopropyl) benzene is less than or equal to 2, preferably less than or equal to 1.5.

6. Composition according to any one of the preceding claims, **characterized in that** it additionally comprises at least one nitroxide preferably chosen from the group consisting of 2,2,6,6-tetramethyl-1-piperidinyloxy, 4-hydroxy-2,2,6,6-tetramethyl-1-piperidinyloxy, 4-methoxy-2,2,6,6-tetramethyl-1-piperidinyloxy, 4-oxo-2,2,6,6-tetramethyl-1-piperidinyloxy, 2,2,5,5-tetramethyl-1-pyrrolidinyloxy, bis(1-oxyl-2,2,6,6-tetramethylpiperidin-4-yl) sebacate, 4,4'-[(1,10-dioxo-1,10-decanediyl)-bis(oxy)]bis[2,2,6,6-tetramethyl-1-piperidinyloxy], 2,2,6,6-tetramethyl-4-hydroxypiperidin-1-oxyl monophosphonate and 3-carboxy-2,2,5,5-tetra-methylpyrrolidinyloxy, more preferentially is 4-hydroxy-2,2,6,6-tetramethyl-1-piperidinyloxy (OH-Tempo) or 4,4'-[(1,10-dioxo-1,10-decanediyl)-bis(oxy)]bis[2,2,6,6-tetramethyl-1-piperidiny-loxy], preferably is 4-hydroxy-2,2,6,6-tetramethyl-1-piperidinyloxy (OH-Tempo).

7. Composition according to Claim 6, **characterized in that** the ratio by weight of the second organic peroxide to the nitroxide is greater than or equal to 1, preferably varies within the range extending from 1 to 50 and more preferentially within the range extending from 5 to 20, and more preferentially within a range extending from 8 to 13.

8. Composition according to any one of the preceding claims, **characterized in that** it additionally comprises one or more crosslinkable polymers preferably chosen from the group consisting of thermoplastic polymers, elastomeric polymers and their mixtures.

9. Composition according to Claim 8, **characterized in that** the crosslinkable polymer(s) is or are chosen from the group consisting of linear low density polyethylene, low density polyethylene (LDPE), high density polyethylene (HDPE), chlorinated polyethylene, ethylene/propylene/diene (EPDM) terpolymers, copolymers of ethylene and of vinyl acetate (EVA), ethylene/propylene copolymers, silicone rubber, natural rubber (NR), polyisoprene (IR), polybutadiene (BR), acrylonitrile/butadiene copolymers (NBRs), styrene/butadiene copolymers (SBRs), chlorosulfonated polyethylene or fluoroelastomers, copolymers of ethylene methyl (meth)acrylate, copolymers of ethylene and of glycidyl methacrylate and their mixtures, preferably is or are chosen from the group consisting of polyethylene, copolymers of ethylene and of vinyl acetate (EVA) and their mixtures, preferably copolymers of ethylene and of vinyl acetate (EVA).

10. Composition according to any one of the preceding claims, **characterized in that** it additionally comprises one or more reinforcing fillers chosen from the group consisting of silica, calcium carbonate, kaolin and their mixtures, preferably kaolin or a mixture of calcium carbonate and silica, more preferentially kaolin.

11. Use of a composition as defined according to any one of Claims 1 to 7 and 10 for the crosslinking of one or more crosslinkable polymers as defined according to either one of Claims 8 and 9.

12. Use according to Claim 11, for increasing the rate of crosslinking of one or crosslinkable polymers as defined according to either one of Claims 8 and 9.

13. Process for the manufacture of all or part of an article comprising a step of crosslinking of a composition as defined according to either one of Claims 8 and 9.

14. Use of a composition as defined according to any one of Claims 8 to 10 for the manufacture of all or part of an article, preferably a foam article.

15. Article, or part of which is obtained by means of the process as defined according to Claim 13.
